# EUROPÄISCHE PATENTANMELDUNG

(11) **EP 2 096 515 A2**
(43) Veröffentlichungstag der Anmeldung: **02.09.2009**
(21) Anmeldenummer: 08005631.0
(22) Anmeldetag: 26.03.2008
(51) Int. Cl.: G06F 1/16

(54) **Mobiler computer**

(30) Priorität: 26.02.2008 EP 08003441
(71) Anmelder: ads-tec GmbH, 70771 Leinfelden-Echterdingen (DE)
(72) Erfinder: Speidel, Thomas, 71706 Markgröningen (DE); Mögerle, Thomas, 72669 Untersingen (DE); Bohver, Matthias, 70376 Stuttgart (DE)
(74) Vertreter: Wasmuth, Rolf

(57) **Zusammenfassung**

Die Erfindung betrifft einen Tablett-PC aus einem Gehäuse (2) mit einem Prozessor, einem Arbeitsspeicher, einem Speichervolumen, einer Anzeigeeinheit und einer Eingabeeinheit, die aus einer gehäuseinternen Stromquelle (10) wie eine Batterie oder ein Akkumulator gespeist werden. Die gehäuseinterne Stromquelle (10) ist aus zwei Einzelstromquellen (10a, 10b) zusammengesetzt, wobei jede Einzelstromquelle (10a, 10b) von einem selbstständigen Akkupack (9) gebildet ist, denen im Gehäuse (2) jeweils eine Akkuaufnahme (19) zugeordnet ist. Der erste und der zweite Akkupack (9) sind derart formgleich ausgebildet, dass jeder Akkupack (9) in jede Akkuaufnahme (19) des Tablett-PCs (1) einschiebbar ist. Jeder Akkupack (9) ist über jeweils eine ihm zugeordnete Kontaktanordnung (11) elektrisch an die Stromversorgung des Computers verbunden.

## Beschreibung

Die Erfindung betrifft einen mobilen Computer, insbesondere einen Handheld-PC, ein Notebook, ein Laptop, ein Tablett-PC oder dgl. nach dem Oberbegriff des Anspruchs 1.

Mobile Computer werden in vielen Arbeitsbereichen genutzt. Ein dabei immer wieder auftretendes Problem ist eine ausreichende Energieversorgung, die einen kabellosen Betrieb des Computers über einen begrenzten Zeitraum ermöglichen soll. Ist der Akkupack eines mobilen Computers erschöpft, muss der Akkupack geladen oder gewechselt werden. Ein Wechsel des Akkupacks ist mit einer Betriebsunterbrechung verbunden; meist muss das System heruntergefahren, der Akku gewechselt und das System wieder hochgefahren werden.

Der Erfindung liegt die Aufgabe zugrunde, die Betriebszeit eines mobilen Computers ohne Netzanschluss zu erhöhen. Die Aufgabe wird erfindungsgemäß nach den kennzeichnenden Merkmalen des Anspruchs 1 gelöst.

Die gehäuseinterne Stromquelle aus zwei Einzelstromquellen zusammenzusetzen eröffnet die Möglichkeit, jede Einzelstromquelle als selbstständigen Akkupack auszubilden, der unabhängig vom jeweils anderen Akkupack in eine Aufnahme des Gehäuses des tragbaren Computers einschiebbar ist. Jeder Akkupack ist über jeweils einen ihm zugeordneten Kontakt elektrisch an die Stromversorgung des Computers angeschlossen. Wird ein Akkupack entnommen, bleibt der andere Akkupack elektrisch mit dem Computer verbunden und stellt die zum Betrieb notwendige Energie zur Verfügung. Der erste und der zweite Akkupack sind derart gleich oder identisch ausgebildet, dass jeder Akkupack in jede der beiden Akkuaufnahmen des Gehäuses einsetzbar und elektrisch zu verbinden ist. So kann der erste Akkupack wahlweise in die erste oder zweite Akkuaufnahme und der zweite Akkupack entsprechend in die zweite oder erste Akkuaufnahme eingesetzt werden. Im Betrieb des mobilen Computers kann der Benutzer einen Akkupack auswechseln, ohne den Betrieb zu unterbrechen. Ein Ersatzakku ist in jede der Akkuaufnahmen einsetzbar.

Ein Akkupack liegt in einer ersten Drehlage in einer ersten Aufnahme und wird zum Einsetzen in die andere Aufnahme in eine zweite Drehlage gedreht. Dabei entspricht die zweite Drehlage der etwa um 180° um die Längsachse gedrehten ersten Drehlage des gleichen Akkupacks.

Die Akkupacks liegen im Gehäuse in ihrer Einbaulage mechanisch zueinander etwa parallel. Dabei ist es vorteilhaft, die Akkupacks parallel und nahe zu einer Längsseite des Gehäuses anzuordnen, so dass - insbesondere bei Tablett-PCs - eine gleichmäßige Gewichtsverteilung erzielt ist. Zweckmäßig liegen die Akkupacks oberhalb und unterhalb der Anzeigeeinheit.

Jeder Akkupack besteht aus Einzelzellen, die mechanisch in einer Reihe hintereinander angeordnet sind, wobei der erfindungsgemäße Akkupack eine im Wesentlichen L-förmige Grundform aufweist, dessen längerer Schenkel durch die Einzelzellen gebildet ist und dessen kürzerer Schenkel eine Kontaktanordnung trägt, die die elektrische Verbindung herstellt. Bevorzugt wird eine derartige Kontaktanordnung als Buchse/Stecker-Verbindung ausgebildet, wobei die Buchse am Akkupack ausgebildet ist, so dass ein versehentliches Kurzschließen durch Überbrücken von Kontakten an einem offen liegenden Akkupack vermieden ist.

In vorteilhafter Weiterbildung der Erfindung werden beide Akkupacks von einer gemeinsamen Gehäuseseite in zugeordnete Akkuaufnahmen eingeschoben, so dass der mobile Computer, insbesondere ein Tablett-PC, von nur einer Gehäuseseite mit Akkupacks zu beschicken ist.

Die elektrische Leistung eines einzelnen Akkupacks ist derart ausgelegt, dass ein einzelner Akkupack zum normalen Betrieb des mobilen Computers vorzugsweise mit eventuellen Peripheriegeräten ausreichend ist.

Weitere Merkmale der Erfindung ergeben sich aus den weiteren Ansprüchen, der Beschreibung und der Zeichnung, in der ein Ausführungsbeispiel der Erfindung im Einzelnen dargestellt ist. Es zeigen:
- Fig. 1: eine perspektivische Ansicht auf einen Tablett-PC mit eingeschobenen Akkupacks,
- Fig. 2: einen Schnitt in der Ebene des Tablett-PCs,
- Fig. 3: in vergrößerter Darstellung ein im Gehäuse eingeschobenes Ende eines Akkupacks,
- Fig. 4: in vergrößerter Darstellung die Einschuböffnung für einen Akkupack,
- Fig. 5: eine Ansicht auf die Einschubseite für Akkupacks am Tablett-PC nach Fig. 1.

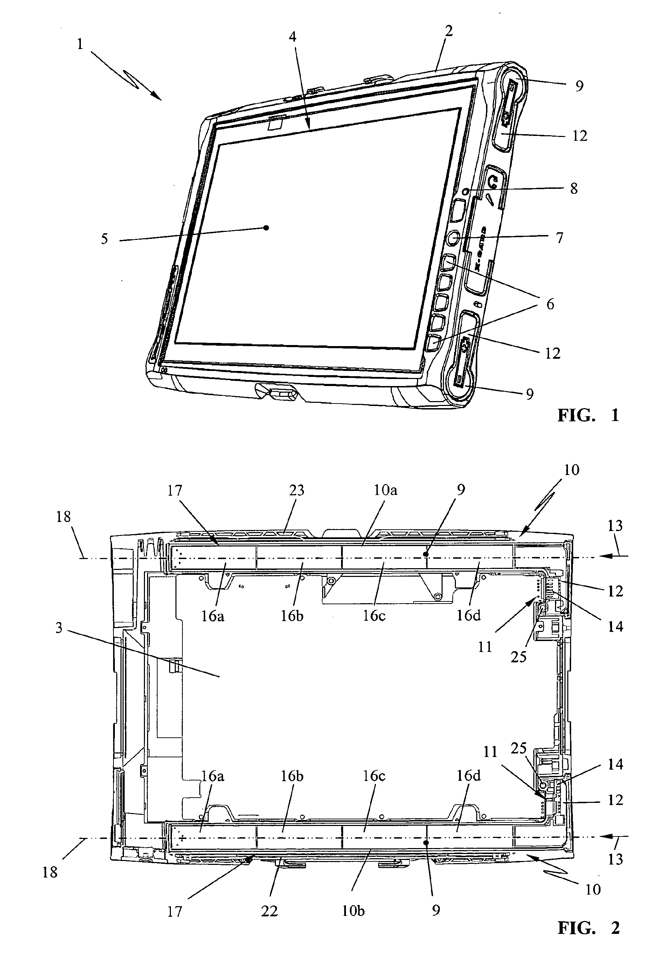

In Fig. 1 ist als tragbarer Computer ein Tablett-PC 1 gezeigt, der ein Gehäuse 2 zur Aufnahme einer Hauptplatine 3 aufweist, auf der computertypische Bauteile wie ein Prozessor, ein Arbeitsspeicher und/oder ein Speichervolumen angeordnet sind. Als Anzeigeeinheit 4 ist ein berührungsempfindlicher Bildschirm vorgesehen, der zugleich als Eingabeeinheit 5 ausgebildet sein kann. Es kann zweckmäßig sein, im Randbereich der Anzeigeeinheit 4 bzw. des Bildschirms Funktionstasten 6, einen Ausschalter 7 sowie Kontrollleuchten 8 anzuordnen. Der mobile, tragbare Computer, der auch ein Handheld-PC, ein Notebook, ein Laptop oder dgl. sein kann, wird aus einer gehäuseinternen Stromquelle 10 gespeist, die als Batterie, bevorzugt als Akku ausgebildet sein kann.

Wie Fig. 2 zeigt, besteht die gehäuseinterne Stromquelle 10 aus zwei Einzelstromquellen 10a, 10b, die jeweils als selbst-ständiger Akkupack 9 ausgebildet ist. Jeder Akkupack 9 bildet ein selbstständiges Bauteil, die formgleich oder identisch und damit untereinander tauschbar ausgebildet sind. Jeder einzelne Akkupack 9 ist unabhängig vom jeweils anderen Akkupack 9 vorzugsweise von der gleichen Seite 20 in das Gehäuse 2 einschiebbar, wobei jeder Akkupack 9 über einen jeweils ihm zugeordneten Kontakt 11 elektrisch an die Stromversorgung des Computers 1 anschließbar ist.

Jeder Akkupack 9 hat eine L-förmige Grundform, wobei der kürzere Schenkel 12 eine Kontaktanordnung aufweist, die in Einschubrichtung 13 eines Akkupacks 9 geschlossen wird. Bevorzugt ist die Kontaktanordnung 11 eine Buchse/Stecker-Verbindung, wobei es vorteilhaft sein kann, am kürzeren Schenkel 12 eine Buchse 14 vorzusehen, während im Gehäuse 1 Kontaktzungen 15 zur Bildung eines gehäusefesten Steckers angeordnet sind. Die Buchse/Stecker-Verbindung wird in Einschubrichtung 13 zusammengesteckt und entgegen der Einschubrichtung gelöst.

Jeder Akkupack 9 besteht im gezeigten Ausführungsbeispiel aus vier Zellen 16a bis 16d, die in einer mechanischen Reihe hintereinander liegen und den langen Schenkel 17 des in der Grundform L-förmigen Akkupacks 9 bilden. Die Zellen 16a bis 16d liegen auf einer Längsachse 18 in Reihe hintereinander. Der kürzere Schenkel 12 dient als Anschlussstück zur Kontaktanordnung 11, wobei im kürzeren Schenkel 12 eine elektronische Schaltung für eine insbesondere intelligente Energieversorgung aufgenommen sein kann. Über diese Energieversorgung wird dem mobilen Computer 1 die Energie der Zellen 16a bis 16d zur Verfügung gestellt.

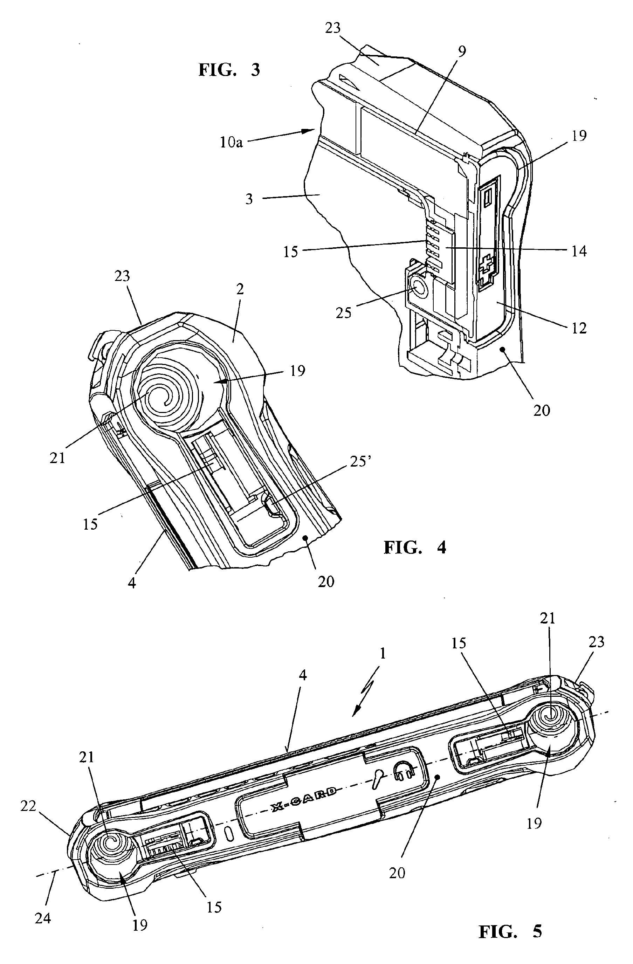

Im Gehäuse 2 des Tablett-PCs sind zwei Akkuaufnahmen 19 ausgebildet, die von einer gemeinsamen Gehäuseseite 20 zu beschicken sind. Die Aufnahmen 19 sind derart ausgebildet, dass die kürzeren Schenkel 12 der Akkupacks einander zugewandt liegen, wie die Figuren 1 und 5 zeigen. Im Boden jeder Aufnahme 19 ist eine Spiralfeder 21 angeordnet, die nach Lösen einer Verriegelung 25 den Akkupack 9 aus der Aufnahme 19 schieben. Anstelle einer Spiralfeder 21 können auch andere federnde Mittel vorgesehen sein. Mit der Verriegelung 25 in Form eines gefederten Rastknopfes wirkt eine Rastnase 25' (Fig. 4) zusammen, die am Gehäuse 2 in der Akkuaufnahme 19 ausgebildet ist.

In Einbaulage liegen die beiden Akkupacks 9 - vgl. Fig. 2 - im Gehäuse zueinander etwa parallel, wobei jeder Akkupack 9 nahe einer Längsseite 22, 23 des PC-Gehäuses 2 liegt. Zwischen den Akkupacks 9 liegt die Hauptplatine 3 des Computers. Wie Fig. 1 zeigt, liegt ein Akkupack 9 oberhalb der Anzeigeeinheit 4 bzw. des Bildschirms und ein zweiter Akkupack 9 unterhalb des Bildschirms.

Wie Fig. 5 zeigt, liegen die Kontaktzungen 15 der gehäusefesten Akkuanschlussstecker zur Längsmittelebene 24 versetzt. Im Ausführungsbeispiel liegt dabei der eine Kontaktstecker 15 auf der einen Seite der Längsmittelebene 24 und der andere Kontaktstecker 15 auf der anderen Seite der Längsmittelebene 24. Es kann auch zweckmäßig sein, den Kontaktstecker 15 symmetrisch zur Längsmittelebene 24 anzuordnen.

In jedem Fall ist eine Anordnung gewählt, die ein Einsetzen der form- bzw. baugleichen Akkupacks 9 in eine beliebige Aufnahme 19 ermöglicht. Dabei kann der Benutzer während des Betriebs des Computers einen einzelnen Akkupack 9 auswechseln, ohne den Betrieb zu unterbrechen. Hierzu sind beide Akkupacks 9 über die Kontaktanordnung 11 und zweckmäßig eine elektronische Schaltung "intelligent" mit der Hauptplatine 3 verbunden. Geht die Ladung eines Akkupacks 9 zur Neige, kann dieser aus dem Gerät 1 entnommen und durch einen frischen Akkupack 9 ersetzt werden, wobei der Betrieb des Computers 1 ununterbrochen weiterlaufen kann. Ein alternatives, wechselweises Austauschen der Akkupacks ist somit im laufenden Betrieb möglich, so dass auch bei einem Wechsel des Akkupacks eine Betriebsunterbrechung vermieden ist.

Da die Akkupacks 9 selbstständige Bauteile sind und nach der Erfindung formgleich ausgebildet werden, kann ein einzelner Akkupack 9 in jede der beiden Akkuaufnahmen 19 des Gehäuses 2 eingesetzt werden. Zum Betrieb des mobilen Computers ist ein Akkupack 9 ausreichend, so dass ein leerer Akkupack - egal in welcher Aufnahme 19 er eingesetzt ist - im laufenden Betrieb gegen einen frisch geladenen getauscht werden kann. Zweckmäßig ist die Formgestalt eines Akkupacks 9 so gewählt, dass er in einer ersten Drehlage in eine erste Aufnahme 19 und in einer zweiten Drehlage in eine zweite Aufnahme 19 einsetzbar und elektrisch kontaktierbar ist. Wie Fig. 1 zeigt, entspricht die zweite Drehlage des unterhalb der Anzeigeeinheit 4 liegenden Akkupacks 9 einer um etwa 180° um die Längsachse 18 gedrehten ersten Drehlage eines Akkupacks 9, wie er oberhalb der Anzeigeeinheit 4 angeordnet ist. Im Ausführungsbeispiel liegen somit die kürzeren Schenkel 12 der Akkupacks 9 einander zugewandt, wie Fig. 1 zeigt.

Die Akkupacks 9 können aus an sich bekannten Zellen bestehen wie NiCd-Zellen, NiMH-Zellen, LiIon-Zellen oder dgl. Zellen moderner Bauart.

## Patentansprüche

1. Mobiler Computer, insbesondere Handheld-PC, Notebook, Laptop, Tablett-PC oder dgl., bestehend aus einem Gehäuse (2) mit einem Prozessor, einem Arbeitsspeicher, einem Speichervolumen, einer Anzeigeeinheit (4) und einer Eingabeeinheit (5), die aus einer gehäuseinternen Stromquelle (10) wie eine Batterie oder Akku gespeist werden, welche über eine zugeordnete Kontaktanordnung (11) elektrisch an die Stromversorgung des Computers (1) anschließbar ist,
**dadurch gekennzeichnet, dass** die gehäuseinterne Stromquelle (10) aus zwei Einzelstromquellen (10a, 10b) zusammengesetzt ist, dass jede Einzelstromquelle (10a, 10b) von einem selbstständigen Akkupack (9) gebildet ist, denen im Gehäuse (2) jeweils eine Akkuaufnahme (19) zugeordnet ist, wobei der erste und der zweite Akkupack (9) derart formgleich ausgebildet sind, dass der erste Akkupack (9) wahlweise in die erste oder zweite Aufnahme (19) und der zweite Akkupack (9) wahlweise in die zweite oder erste Aufnahme (19) einsetzbar ist, und jeder Akkupack (9) über eine jeweils ihm zugeordnete Kontaktanordnung (11) elektrisch an die Stromversorgung des Computers (1) anschließbar ist.

2. Computer nach Anspruch 1,
**dadurch gekennzeichnet, dass** ein Akkupack (9) in einer ersten Drehlage in eine erste Aufnahme (19) im Gehäuse (2) einschiebbar ist und derselbe Akkupack (9) in einer zweiten Drehlage in die zweite Aufnahme (19) im Gehäuse (2) einschiebbar ist.

3. Computer nach Anspruch 2,
**dadurch gekennzeichnet, dass** die zweite Drehlage der um etwa 180° um die Längsachse (18) gedrehten ersten Drehlage des Akkupacks (9) entspricht.

4. Computer nach einem der Ansprüche 1 bis 3,
**dadurch gekennzeichnet, dass** die Akkupacks (9) in ihrer Einbaulage im Gehäuse (2) mechanisch zueinander etwa parallel liegen.

5. Computer nach einem der Ansprüche 1 bis 4,
**dadurch gekennzeichnet, dass** die Akkupacks (9) parallel und nahe zu je einer Längsseite (22, 23) des Gehäuses (2) angeordnet sind, vorzugsweise oberhalb und unterhalb der Anzeigeeinheit (5).

6. Computer nach einem der Ansprüche 1 bis 5,
**dadurch gekennzeichnet, das** jeder Akkupack aus mechanisch in Reihe angeordneten Einzelzellen (16a, 16b, 16c, 16d) besteht.

7. Computer nach einem der Ansprüche 1 bis 6,
**dadurch gekennzeichnet, dass** ein Akkupack (9) eine L-förmige Grundform aufweist, wobei in dem kürzeren Schenkel (12) ein Teil der Kontaktanordnung (11) vorgesehen ist.

8. Computer nach Anspruch 7,
**dadurch gekennzeichnet, dass** die Kontaktanordnung (11) eine Buchse/Stecker-Verbindung ist.

9. Computer nach einem der Ansprüche 1 bis 8,
**dadurch gekennzeichnet, dass** in Einbaulage der Akkupacks (9) die kürzeren Schenkel (12) der L-förmigen Grundform einander zugewandt liegen.

10. Computer nach einem der Ansprüche 1 bis 9,
**dadurch gekennzeichnet, dass** die Kontaktanordnung (11) der Akkuaufnahmen (19) zu einer Längsmittelebene (24) des Akkupacks versetzt liegen.

11. Computer nach einem der Ansprüche 1 bis 10,
**dadurch gekennzeichnet, dass** die Einschuböffnungen der Akkuaufnahmen (19) auf einer gemeinsamen Gehäuseseite (20) liegen.

12. Computer nach einem der Ansprüche 1 bis 11,
**dadurch gekennzeichnet, dass** die Ladungskapazität eines einzelnen Akkupacks (9) zum Betrieb des mobilen Computers ausreichend ist.
